# EUROPEAN PATENT APPLICATION

(11) **EP 3 372 624 A1**
(43) Date of publication of application: **12.09.2018**
(21) Application number: 17159351.0
(22) Date of filing: 06.03.2017
(51) Int. Cl.: C08G 18/48, C08G 18/76, C08G 18/10, C08G 18/32, C08G 71/04

(54) **ONE COMPONENT COMPOSITION BASED ON COMPOUNDS WITH AT LEAST TWO EXO-VINYLENE CYCLIC CARBONATE UNITS**

(71) Applicant: Henkel AG & Co. KGaA, 40589 Düsseldorf (DE)
(72) Inventor: PELA, Roberto, 40215 Duesseldorf (DE); KINZELMANN, Hans-Georg, 50259 Pulheim (DE); GARCIA-MIRALLES, Jose, 40217 Düsseldorf (DE); KAMM, Thomas, 51105 Köln (DE); SEGGEWIß, Patrick, 46395 Bocholt (DE); HARTMANN, Olaf, 40235 Düsseldorf (DE); LICHT, Ulrike, 68309 Mannheim (DE); LEONHARDT, Viktoria, 67063 Ludwigshafen (DE); MORMUL, Verena, 68161 Mannheim (DE); SCHUMACHER, Karl-Heinz, 67433 Neustadt (DE); BOERZSOENYI, Gabor, 60528 Frankfurt a. M. (DE); KLOPSCH, Rainer, 67551 Worms (DE)

(57) **Abstract**

The present application relates to a moisture curable, one-component composition comprising: i) at least one compound (VCC) having two or more cyclic carbonate units, wherein said cyclic carbonate units are bonded to one another by means of at least one linking group; and, ii) at least one latent hardener which is activatable by moisture, said hardener being selected from the group consisting of oxazolidines, aldimines, ketimines and enamines.

## Description

### FIELD OF THE INVENTION

This application is directed to one-component (1 K) compositions comprising one or more compounds having two or more exo-vinylene cyclic carbonate units and at least one latent hardener. More particularly, the application is directed to one-component compositions, having utility as coatings, adhesives or sealants, and comprising: one or more compounds having two or more cyclic carbonate units; and, at least one latent hardener which is activatable by moisture, said hardener being selected from the group consisting of oxazolidines, aldimines, ketimines and enamines.

### BACKGROUND TO THE INVENTION

High-molecular-weight polyurethane polymers - which may be linear or branched, non-crosslinked or crosslinked - find an important utility as coating materials, sealants, adhesives, cast parts, foams and elastomeric fibers. In coating, sealants and adhesive applications, these polymers are typically applied either as solvent-free and anhydrous reactive 100% systems or as a coating material dissolved in an organic solvent. The coating materials are applied by means of a suitable application system to a first substrate and then optionally hardened after evaporation of the solvent.

The polyurethane polymers themselves are typically prepared by curing a mixture of two reactants, which react together to produce the polyurethane. The reaction - which is believed to be via a step-growth polymerization mechanism - can be carried out in an inert liquid that functions as a solvent and is commonly initiated by exposing the mixture to at least one of heat, moisture and a curing catalyst. Intermediates formed during the step-growth polymerization should be sufficiently soluble in the solvent so as to allow the step-growth polymerization to proceed to an extent necessary for producing the polyurethane with a desired molecular weight.

The reactants used to prepare the polyurethane in the curing step can have different structures and thus their respective reactions produce different structures of the polyurethanes. The curing step in the preparation of the polyurethane can be broadly characterized by the structures of the functionalized reactants as being either "*isocyanate-based*" or so called "*isocyanate-free*"*.*

The isocyanates present in conventional isocyanate-based coating materials represent a toxicological risk. This relates, on the one hand, to the processing of these coating materials during their use, because the isocyanates normally have a high toxicity and a high allergenic potential. On the other hand, there is the risk that, in flexible substrates, incompletely reacted aromatic isocyanate migrates through the substrate and is there hydrolyzed by moisture or water-containing components to carcinogenic aromatic amines.

The skilled practitioner, desirous to use isocyanate-free systems, may employ a plurality of different chemistries. For instance: US Patent No. 5,356,669 (Rehfuss et al.) discloses polyurethanes based on reaction products of (a) a first component comprising a polymer backbone having appended thereto at least one carbamate group, and (b) a second component comprising a compound having a plurality of groups that are reactive with said carbamate group; US Patent No. 8,653,174 B2 (Anderson et al.) discloses a substantially isocyanate-free multicomponent composition comprising a polycarbamate as a first component and a polyaldehyde or an acetal or hemiacetal thereof as a second component. However, it remains desirable to develop isocyanate-free systems for hardenable coating compositions which have good hardening properties, ideally even at room temperature, and which do not produce undesired volatile organic compounds upon curing.

The present inventors have focused upon the use of cyclic carbonates, which can react with amines to form urethanes at room temperature, as a plausible alternative to polyurethane formation by the isocyanate / polyol reactions. Some work has been presented on this chemistry in the known art.

WO 2011/157671 (BASF SE) discloses a cyclic carbonate compound with a double bond directly attached to the ring system, which is also called an exo-vinylene cyclic carbonate. No compounds with two or more exo-vinylene cyclic carbonate compounds are described in this citation.

Compounds with two exo-vinylene cyclic carbonate groups, which are linked to one another by a direct bond between the vinylene groups, are described in US Patent No. 3,541,087 (Air Reduction Co. Inc). Coating materials containing a compound with at least two cyclic exo-vinylene carbonate groups linked to one another by a siloxane group are described in WO 2015/010924 (BASF SE). Polymerizable alkylidene-1,3-dioxolan-2-ones are described in WO 2013/144299 (BASF SE), the polymerization occurring via an ethylenically unsaturated group which is located as a substituent via a spacer on the alkylidene group. Coating material compositions are described in WO 2015/039807 (BASF Coatings GMBH) which contain *inter alia* an oligomeric or polymeric compound having at least two alkylidene-1,3-dioxolan-2-one groups: specifically the linking of the dioxolanones in this case occurs via the alkylidene groups.

WO 2015/164703 and WO 2015/164692 (both Valspar Sourcing Inc.) disclose polycyclocarbonate compounds and polymers made from such compounds. Enabling disclosures are only presented for compounds with two polycyclocarbonate groups.

WO2006/010408 (Henkel KgaA) describes a two component (2K) bonding agent system, comprising at least components (A) and (B), where a) a compound with at least two cyclic carbonate groups, or a mixture of two or more compounds with at least two cyclic carbonate groups is component (A) and b) a compound with at least two (-NHR-) atom groups or a mixture of two or more compounds with at least two (-NHR-) atom groups is component (B), where R = H, alkyl or aryl. In said composition, component (A) has a mean molecular weight (Mn) of 1000 g/mol.

The object of the invention is to develop novel one component (1 K) compositions based on cyclic carbonate groups as the reactive structural unit, which compositions show excellent storability in the absence of moisture but which can harden in the presence of moisture at low temperature and ideally even at room temperature to yield a system having desirable mechanical properties.

### STATEMENT OF THE INVENTION

In accordance with a first aspect of the invention, there is provided a moisture curable, one-component composition comprising:
i) at least one compound (VCC) having two or more exo-vinylene cyclic carbonate units, wherein said exo-vinylene cyclic carbonate units are bonded to one another by means of at least one linking group; and,
ii) at least one latent hardener which is activatable by moisture, said hardener being selected from the group consisting of oxazolidines, aldimines, ketimines and enamines.
Said linking group may or may not be bound directly to the exo-vinylene double bonds, with the latter being preferred.

In an important embodiment, the compound (VCC) is characterized in that the linking group comprises an acetal group. The linking group should preferably have at least one acetal group in the case that the compound (VCC) has exactly two exo-vinylene cyclic carbonate units.

It is further preferred that the compound (VCC) meets one or both of the conditions that: the linking group of the compound (i) is an organic, siloxane-free linking group; and, the linking group of said compound (i) does not comprise units formed by polymerization of (meth)acrylic monomers.

In an important embodiment, the one component composition comprises a compound (VCC) having two or more exo-vinylene cyclic carbonate units which are 5-alkylidene-1,3-dioxolan-2-one units of general formula (I): 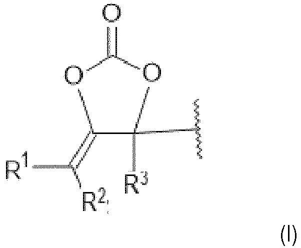
wherein: the at least one linking group is located between the 4 positions of the 5-alkylidene-1,3-dioxolan-2-one units; and,
R¹ to R³ are, independently of one another, hydrogen or an organic functional group.
Whilst there is no express limitation on the form of the linking group in the compounds of General Formula (I), that linking group is desirably characterized by comprising at least one functional group selected from ether groups, ester groups, amide groups, urethane groups, urea groups and acetal groups. The linking group may in particular comprise an acetal group. And where the compound (VCC) of Formula (I) has exactly two exo-vinylene cyclic carbonate units, preferably at least one acetal group should be present in the linking group.

The total amount of latent hardener (ii) in the one component composition should preferably be selected so that the molar ratio of carbonate groups to the latent amine functional groups (F) in the hardener is in the range of from 1:10 to 10:1, preferably in the range of from 1:5 to 5:1, more preferably in the range 1:2 to 4:1 and particularly preferably in the range from 1:1 to 2:1, for example from 1:1 to 1.2:1. In an alternative but not mutually exclusive expression, the total amount of hardener (part ii)) may be from 0.1 - 80 wt.%, preferably from 10 to 70 wt.%, based on the combined weight of cyclic carbonate compounds and said hardener.

It is preferable that said at least one latent hardener of the composition is selected from oxazolidines, ketimines and aldimines. A particular preference for ketimines is acknowledged and, more particularly, for ketimines obtained by reaction of: an amine (A) selected from aliphatic linear, branched and cyclic, and mixed aliphatic-aromatic amines having at least two primary amino groups; and, a ketone having a boiling point of greater than 80°C, preferably greater than 110°C.

The use of the composition - as defined hereinabove and as defined in the appended claims - in coatings, sealants or adhesives is presented as a second aspect of the present invention.

In accordance with a further aspect of the present invention, there is provided a method of forming a composite article comprising the steps of: a) providing first and second substrates; b) applying the composition as defined hereinabove and in the appended claims to at least one of said substrates; c) contacting the first and second substrates via the applied composition; and d) curing the composition by contact with moisture.

### DEFINITIONS

As used herein, the singular forms "a", "*an*" and "*the*" include plural referents unless the context clearly dictates otherwise.

The terms "*comprising*", "*comprises*" and "*comprised* of" as used herein are synonymous with "*including*", "*includes*", "*containing*" or "*contains*", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "*preferred*", "*preferably*" and "*particularly*" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The zero-shear viscosity mentioned in this application means the limiting value of the viscosity function at infinitely low shear rates. It is determined herein using an Anton Paar Rheometer MCR 100 (US 200 Evaluation Software) in plate-plate geometry. The samples are measured in oscillatory shearing under: low shear amplitudes of 10%; a temperature of 23°C; angular frequency ramp log 100-0.1 1/s; a measuring gap of 0.5 mm; evaluation according to Carreau-Gahleitner I; and, a punch diameter of 25 mm.

The molecular weights given in the present text refer to number average molecular weights (Mn), unless otherwise stipulated. All molecular weight data refer to values obtained by gel permeation chromatography (GPC), unless otherwise stipulated.

As used herein "*boiling point*" means that boiling point determined at a pressure of 1 atmosphere (101.3 kiloPascal).

As used herein, room temperature is 23°C plus or minus 2°C.

OH values given herein were obtained following *Deutsche (DGF) Einheitsmethoden zur Untersuchung von Fetten, Fettprodukten, Tensiden und verwandten Stoffen* (Gesamtinhaltsverzeichnis 2016) C-V 17b (53).

As used herein, the term "*equivalent (eq.*"*)* relates, as is usual in chemical notation, to the relative number of reactive groups present in the reaction; the term "*milliequivalent*" (*meq*) is one thousandth (10⁻³) of a chemical equivalent.

As used herein, "*aliphatic group"* means a saturated or unsaturated linear (i.e., straight-chain), branched, cyclic (including bicyclic) organic group: the term "*aliphatic group"* thus encompasses *"alicyclic group"*, the latter being a cyclic hydrocarbon group having properties resembling those of an aliphatic group. The term "*aromatic group"* means a mono- or polynuclear aromatic hydrocarbon group.

The aforementioned citations mentioned as background art attest to the fact that the term "*exo-vinylene cyclic carbonate*" is a well-known term of art. However, for completeness, it is noted that such "*exo-vinylidene cyclic carbonates*" may also be referred to as alkylidene cyclic carbonates and, in particular, alpha-alkylidene cyclic carbonates. The terms "exo", "*vinylidene*" and "*alkylidene group*" are being used in accordance with their standard definitions in the art as found in: http://goldbook.iupac.org/E02094.html; http://goldbook.iupac.org/V06623.html; and, http://goldbook.iupac.orq/A00232.html respectively.

As used herein, "*alkyl group*" refers to a monovalent group that is a radical of an alkane and includes straight-chain and branched organic groups, which groups may be substituted or unsubstituted. The term "*alkylene group*" refers to a divalent group that is a radical of an alkane and includes linear and branched organic groups, which groups may be substituted or substituted.

As used herein, "*polyol*" refers to any compound comprising two or more hydroxyl groups. The term thus encompasses diols, triols and compounds containing four or more -OH groups.

The term "*essentially free*" is intended to mean herein that the applicable group, compound, mixture or component constitutes less than 0.1 wt.%, based on the weight of the one component composition. In particular, the one-component composition of the present invention is preferably essentially free of NCO groups. Alternatively or additionally, the one-component composition is preferably essentially free of water.

### DETAILED DESCRIPTION OF THE INVENTION

### Compounds Having Two or More Cyclic Carbonate Units [Compound (i)]

There is no particular intention to limit on the compounds (i) having two or more exo-vinylene cyclic carbonate units which may find utility in the present invention. The compounds may, for instance, possess an oligomeric or polymeric residue (linking group) to which is bound from 2 to 30 exo-vinylene cyclic carbonate groups, said cyclic carbonate groups independently having 5, 6 or more members in their constituent rings. It is however preferred that said compounds (i) comprise from 2 to 10, preferably from 3 to 10 exo-vinylene cyclic carbonate groups, wherein said cyclic carbonate groups have 5-membered rings formed of 3 carbon atoms and 2 oxygen atoms, in which ring a carbon atom disposed between the oxygen atoms is substituted by oxygen (carbonate group), and wherein the 5-membered ring is closed by an ethylene group between the two oxygen atoms.

It is noted that such 5-membered cyclic carbonate units are desirable because they can be easily prepared by reaction of a polyepoxide with carbon dioxide to convert the epoxy groups to cyclic carbonate groups: such a reaction is described *inter alia* in Kihara et al. J. Org Chem., 1993, 58, 6198-6202.

Preferred compounds (i) of the present invention are characterized by weight average molecular weights (Mw) between 500 and 50,000 g/mol, particularly preferably between 500 and 10,000 g/mol, as measured by gel permeation chromatography (GPC) in tetrahydrofuran using a polystyrene standard. Additionally or alternatively, preferred compounds (i) are characterized by a viscosity of from 0.5 to 5000 Pa·s (measured as zero-shear viscosity).

The linking group of the compounds (i) may or may not be bonded to the exo-vinylene double bonds; it is preferred that that the linking group is not bonded to the exo-vinylene double bonds. Further, it is preferred that the linking group comprises an acetal group: the linking group should preferably have at least one acetal group in the case that the compound (VCC) has exactly two exo-vinylene cyclic carbonate units. The presence of acetal groups does not preclude the presence of other functional groups in the linking group. It should however be noted that effective compounds (i) are characterized by having one or both of: a linking group that is free of siloxane groups; and, a linking group that does not comprise units formed by the polymerization of (meth)acrylic monomers.

Where embodiments of compounds (i) are described below, the statements of preference of the previous two paragraphs may be applied to said embodiments.

In an important embodiment, the compound (VCC) of the one component composition comprises two or more 5-alkylidene-1,3-dioxolan-2-one units and thereby meets General Formula (I) below: 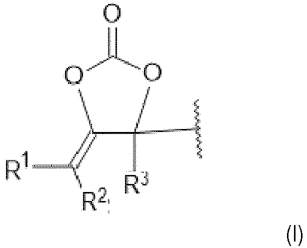 wherein the at least one linking group is located between the 4-positions of the 5-alkylidene-1,3-dioxolan-2-one units and wherein R¹ to R³ independently of one another denote hydrogen or an organic group.

In General Formula (I) R¹ and R² independently of one another preferably stand for a C1 to C10 alkyl group, a C1 to C6 alkyl group, a C1 to C3 alkyl group, a methyl group, or particularly preferably for an H atom. R³ preferably stands for a C1 to C10 alkyl group, a C1 to C6 alkyl group, a C1 to C3 alkyl group, or for an H atom, particularly preferably for a methyl group. R¹, R², and R³ particularly preferably stand for hydrogen or R¹ and R² stand for hydrogen and R³ stands for a methyl group.

Suitable compounds (VCC) of the invention are, for example, those of the formula (II) 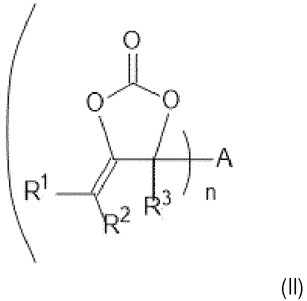
wherein: R¹ to R³ have the same meaning as in formula (I) above;
n is a number greater than or equal to 2, preferably from 2 to 10 or from 3 to 10; and,
A denotes a linking group.

Preferably, -A in Formula (II) has the meaning -B-Q, wherein:
B denotes a spacer group, for example, a divalent hydrocarbon group, in particular an alkylene group preferably having 1 to 6 carbon atoms, e.g., butylene, propylene, ethylene, or particularly preferably methylene; and,
Q is a group that contains at least one functional group selected from siloxane groups, poly(meth)acrylate groups, ether groups, ester groups, amide groups, urethane groups, urea groups and acetal groups.

Suitable, for example, are compounds of the formula (III) 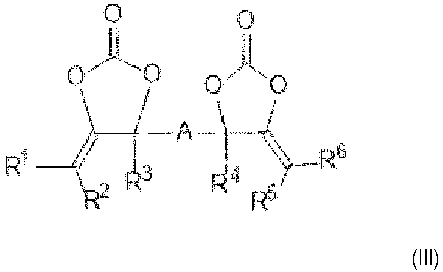 wherein: R¹ to R⁶ independently of one another each denote hydrogen or an organic group.

In said Formula (III) R¹ to R³ preferably have the same meaning as in formula (I). R⁵ and R⁶ preferably have the same meaning as R¹ and R², and R⁴ preferably has the same meaning as R³.

Preferably, -A- has the meaning -B-Q-B-, wherein:
B denotes a spacer group, for example, a divalent hydrocarbon group, in particular an alkylene group preferably having 1 to 6 carbon atoms, e.g., butylene, propylene, ethylene, or particularly preferably methylene; and,
Q is a group which contains at least one functional group selected from siloxane groups, poly(meth)acrylate groups, ether groups, ester groups, amide groups, urethane groups, urea groups and acetal groups.

Also suitable, for example, are compounds of the formula (IV) 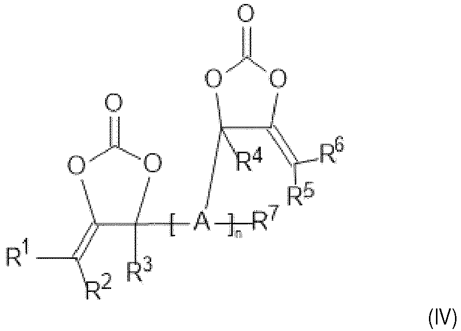 or compounds of the formula (IVa) 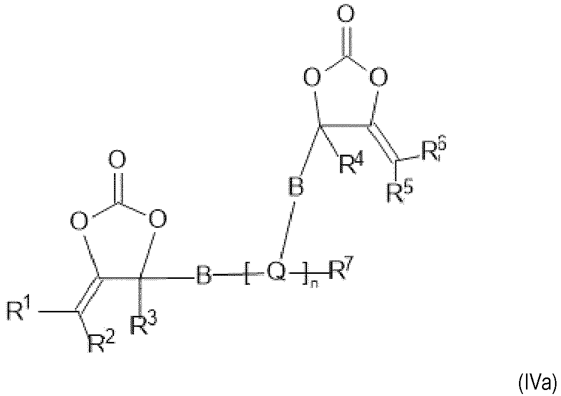
wherein: R¹ to R⁶, A, B, and Q have the same meaning as in Formula (III);
R⁷ denotes hydrogen, an OH group, or an organic group, e.g., an alkyl, alkoxy, or hydroxyalkyl group having, for example, 1 to 10 carbon atoms; and,
n denotes a number greater than or equal to 1, preferably from 1 to 10 or from 2 to 10.

Also suitable, for example, are compounds of the formula (V) 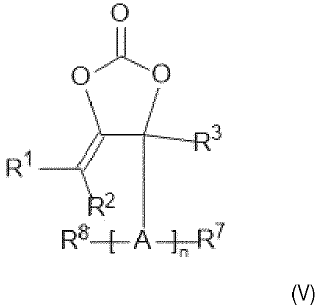 or compounds of the formula (Va) 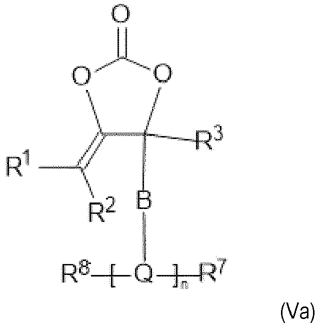
wherein: R¹ to R³, A, B, and Q have the same meaning as in formula (III);
R⁷ and R⁸ independently of one another denote hydrogen, an OH group, or an organic group, e.g., an alkyl, alkoxy, or hydroxyalkyl group having, for example, 1 to 10 carbon atoms, and where R⁷ and / or R⁸ can contain an exo-vinylene group; and,
n denotes a number greater than or equal to 1, if at least one of the R⁷ and R⁸ groups contains at least one exo-vinylene group, and n denotes a number greater than or equal to 2, preferably from 2 to 10 or from 3 to 10, if neither of the R⁷ and R⁸ groups contains an exo-vinylene group.

In preferred compounds of the formulas (II) to (V), (IVa), and (Va):
R¹, R², R⁵, and R⁶ independently of one another preferably stand for a hydrogen (H) atom or a C1 to C10 alkyl group, for instance a C1 to C6 alkyl group or a C1 to C3 alkyl group; and,
R³ and R⁴ independently of one another preferably stand for a hydrogen atoms or a C1 to C10 alkyl group, for example a C1 to C3 alkyl group or a methyl group.

In particularly preferred compounds of the formulas (II) to (V), (IVa), and (Va):
R¹, R², R⁵, and R⁶ each stand for an H atom;
R³ and R⁴ independently of one another stand for a methyl group or for an H atom; and,
R⁷ and R⁸ independently of one another stand for groups of polyhydric alcohols having 2 to 12 carbon atoms, which may also be interrupted by -O-, -S-, or -NR₂- groups, where R stands for H or C1 to C12 alkyl.

In the compounds of the formulas (II) to (V), (IVa), and (Va), it is further preferred that the linking group A - or, by correlation, group B-Q or group B-Q-B - is a siloxane-free, organic linking group, with the exception of a linking group formed by the polymerization of (meth)acrylic monomers.

A preference for linking group A - or by correlation, group B-Q or group B-Q-B - comprising at least one functional group selected from ether groups and acetal groups may be mentioned. More particularly, the linking group A in the compounds of the formulas (II) to (V) and the group Q in the compounds (II), (III), (IVa), and (Va) should preferably have at least one acetal group.

Noting this particular preference, in an interesting embodiment, -A- in compounds of the formula (III) stands for a structural element of the formula:

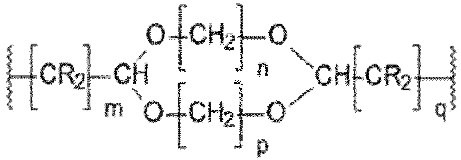

Wherein: R stands for a hydrocarbon group, e.g., a C1 to C10 alkyl group or preferably for hydrogen; and, m, n, p, and q stand for numbers from 1 to 10, where m and q are preferably 1 and n and p preferably denote numbers from 4 to 10.

Preferred compounds are those of the formula (Vb) 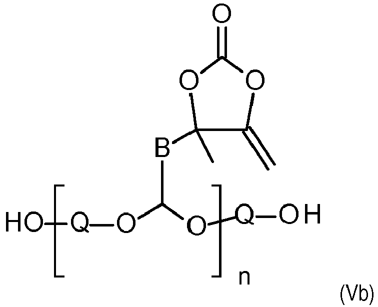
wherein: B denotes an alkylene group preferably having 1 to 6 carbon atoms, e.g., butylene, propylene, ethylene, or particularly preferably methylene;
Q denotes a group derived from a polyol, a polyol being an alcohol with at least two hydroxy groups; and,
n is a number greater than or equal to 2, preferably from 2 to 10 or from 3 to 10.

Suitable as polyol-derived groups (Q) are, in particular, the groups derived from the alcoholic hardeners, specified hereinbelow, that is from polyols preferably selected from ethylene glycol, 1,3-propanediol, 1,4-butanediol, diethylene glycol, triethylene glycol, neopentyl glycol, 1,5-pentanediol, 1,6-hexanediol, 1,8-octanediol, 3-methyl-1,5-pentanediol, 1,4-bis(hydroxymethyl)cyclohexane, 1,6-bis(hydroxymethyl)cyclohexane, glycerol, diglycerol, polyethylene glycol, polypropylene glycol, PolyTHF, pentaerythritol, dipentaerythritol, and, sugar alcohols such as sorbitol and mannitol.

Preferred compounds are also those of the formula (Vc): 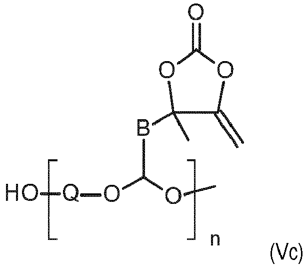 wherein B, Q, and n have the same meaning as in formula (Vb).

Preferred compounds are also those of the formula (IVb): 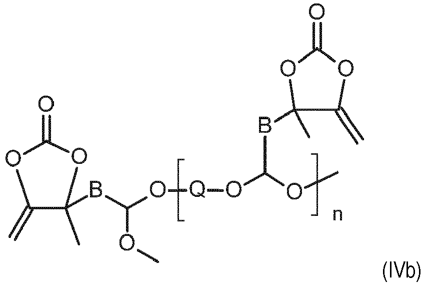
wherein: B and Q have the same meaning as in formula (Vb); and,
n is a number greater than or equal to 1, preferably from 1 to 10 or from 2 to 10.

Preferred compounds are also those of the formula (VI): 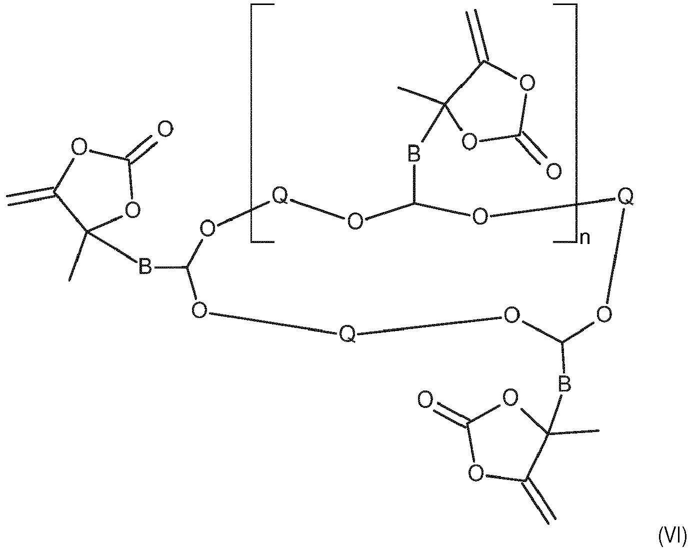
wherein: B and Q have the same meaning as in formula (Vb); and,
n is a number greater than or equal to 0, preferably from 0 to 10 or from 1 to 5.

The following are identified as being preferred examples of compounds (i) for use in the composition of the present invention:
a) Compound of the formula (VIa): 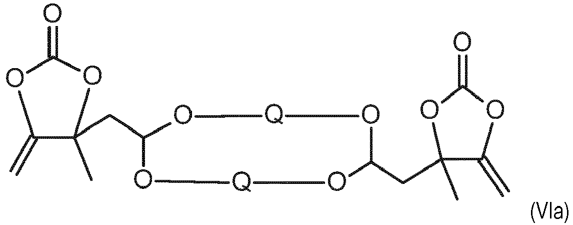
b) Compound of the formula (IVc): 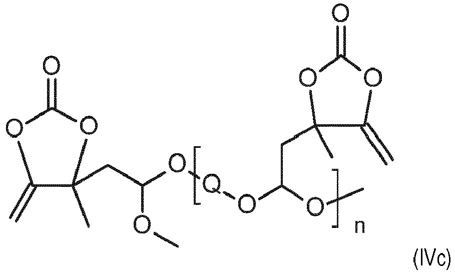 with n = 1, 2, or 3.
c) Compound of the formula (Vd): 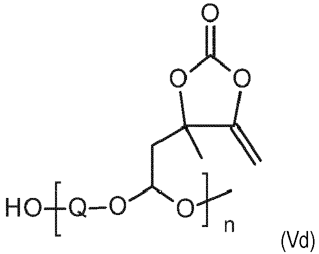 with n being greater than or equal to 2, preferably 2 or 3.
d) compound of the formula (Ve): 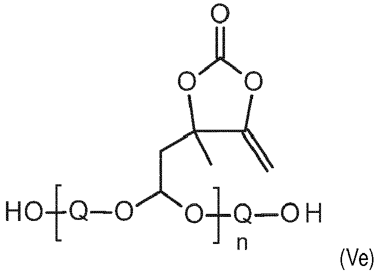 with n being greater than or equal to 2, preferably 2 or 3.

Here, -O-Q-O- in formulas VIa, IVc, Vd, and Ve in each case stands for the group of a dihydric alcohol, preferably selected from ethylene glycol, 1,3-propanediol, 1,4-butanediol, diethylene glycol, triethylene glycol, neopentyl glycol, 1,5-pentanediol, 1,6-hexanediol, 1,8-octanediol, 3-methyl-1,5-pentanediol, 1,4-bis(hydroxymethyl)cyclohexane, 1,6-bis(hydroxymethyl)cyclohexane, glycerol, diglycerol, polyethylene glycol, polypropylene glycol, PolyTHF, pentaerythritol, dipentaerythritol and sugar alcohols such as sorbitol and mannitol.

### Preparation

The above described compounds (VCC) - for use in the composition of the present invention can be prepared, for example, by transacetalization of an exo-vinylene cyclic carbonate of the formula (VI I): 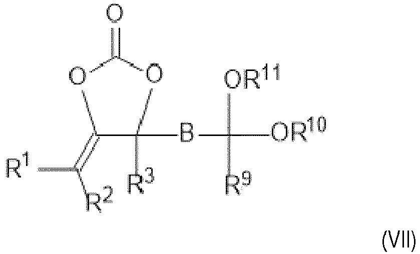
Wherein: R¹ to R³ and R⁹ independently of one another denote hydrogen or an organic group;
R¹⁰ and R¹¹ independently of one another denote an organic group; and,
B denotes an organic linking group (spacer).
R¹ to R³ preferably have the same meaning as in formula (I). R⁹ preferably stands for a C1 to C10 alkyl group, a C1 to C6 alkyl group, a C1 to C3 alkyl group, a methyl group, or particularly preferably for an H atom. R¹⁰ and R¹¹ preferably stand for a C1 to C10 alkyl group, a C1 to C6 alkyl group, or a C1 to C3 alkyl group, particularly preferably for a methyl group. B preferably stands for an alkylene group having 1 to 4 carbon atoms.

In an important embodiment, R¹ and R² in compounds of the formula (VII) each stand for a H atom; R³ and R⁹ independently of one another for methyl or for a H atom; R¹⁰ and R¹¹ independently of one another for hydrocarbon groups, in particular for C1 to C10 alkyl groups or alkyl groups having 1 to 4 carbon atoms, particularly preferably for methyl groups; and, B stands for an alkylene group having 1 to 4 carbon atoms, in particular for methylene.

A compound of the formula (VIIa) below is particularly preferred as the reagent to be subjected to transacetalization:

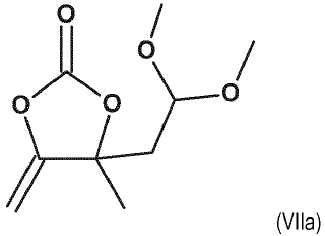

Without intention to limit the present invention, the exo-vinylene cyclic carbonates suitable for a transacetalization can be prepared by a method in which:
i) in a first step, a compound with a terminal triple bond is reacted with an alkanone or alkanal, which contains an acetal group, the triple bond being added to the carbonyl group of the alkanone or alkanal with the formation of a hydroxy compound; and,
ii) in a second step, the ring closure to form the carbonate group takes place with carbon dioxide.

### Step i)

This reaction step is an addition, known perse, of triple bonds to a carbonyl group. Suitable compounds with a terminal triple bond are in particular compounds of the formula (VIII):

Y-CH=CH (VIII)

where Y stands for an H atom, a hydrocarbon group having from 1 to 10 carbon atoms, e.g., an alkyl or aryl group, or a protective group having a maximum of 10 carbon atoms. Provided Y is not a protective group, the substituents of the Y-substituted C atom determine the subsequent groups R¹, R², R⁵, and R⁶ in formulas (I) to (V). Proceeding from Formula (VIII), therefore, one of the R¹ or R² groups or one of the R⁵ or R⁶ groups in Formulas (I) to (V) is an H atom and the other respective group is Y. The preferred meanings of Y therefore correspond to the above preferred meanings of R¹, R², R⁵, and R⁶.

It is noted that Y can also stand for a protective group, however. Protective groups are cleaved off again during or after the synthesis, so that in this case the subsequent R¹ and R² or R⁵ and R⁶ groups in formulas (I) to (V) and (VII) each stand for an H atom. A suitable protective group is, e.g., the trimethylsilyl group (abbreviated as TMS).

The employed alkanones or alkanals contain an acetal group. Preferred alkanones or alkanals with an acetal group are those of the formula IX: 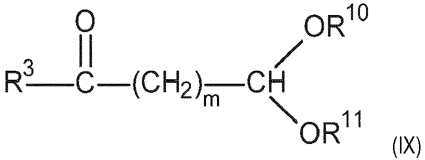
wherein: R³ stands for an H atom or a C1 to C10 alkyl group; and,
m stands for 0 or an integer from 1 to 10, preferably an integer from 1 to 6 and more preferably m stands for 1. The group 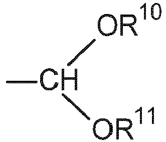 stands for the acetal group, where R¹⁰ and R¹¹ stand for hydrocarbon groups, in particular for C1 to C10 alkyl groups or alkyl groups having 1 to 4 carbon atoms, particularly preferably for methyl groups. R³ corresponds to R³ or R⁴ in formulas I to V and VII and has the corresponding meanings and preferred meanings; R³ is a methyl group in a preferred embodiment.

Various methods are known for carrying out the addition reaction of this first synthesis step. The starting compounds are preferably reacted in the presence of a strong base such as a metal alcoholate: this is preferably a metal salt of an aliphatic alcohol, in particular a metal salt of a C1 to C8, or C2 to C6 alcohol, such as ethanol, n-propanol, isopropanol, n-butanol or tertiary butanol; the metal cation of the metal alcoholate is preferably an alkali metal cation with Na⁺ and K⁺ being preferred. Mentioned as preferred metal alcoholates are potassium-tert-butylate, sodium-tert-butylate, potassium isopropylate, and sodium isopropylate.

The addition reaction is preferably carried out in the presence of a solvent. Inert solvents are preferred as solvents; these contain no reactive groups that react with the starting compounds. Inert, polar, aprotic solvents are particularly preferred. Named as such are, e.g., cyclic ether compounds, in particular tetrahydrofuran (THF).

The addition reaction is generally exothermic and therefore cooling preferably takes place during the reaction. The temperature of the reaction mixture is preferably a maximum of 50°C, in particular a maximum of 25°C; it is preferably between 0°C and 25°C.

Water, optionally acid, and optionally a non-polar organic solvent can be added to work up the obtained product mixture. In that circumstance where the product of value from the 1^{st} step already forms an independent organic phase, the organic solvent can be omitted. Two phases form of which the organic phase contains the product of the 1^{st} step (addition product). The organic phase can be dried to remove water. Solvent can be easily removed by distillation. The product can be obtained in pure form by vacuum distillation. Alternatively, the workup can also occur using the conventional methods of crystallization or extraction, particularly if the product from the 1^{st} step has a very high boiling point.

### Step ii)

Having regard to said second step of the disclosed method - the ring closure with carbon dioxide - the product thereof is a compound with a cyclic carbonate group and an acetal group. In an autoclave or other suitable reaction vessel, carbon dioxide, optionally in admixture with an inert gas, is brought into contact with the starting compound (*step i) product*) preferably as a gas or in the supercritical state under pressure. The reaction is preferably catalyzed using either a base as a catalyst or a catalyst system comprising both a base and a metal salt.

Compounds with at least one tertiary amino group, e.g., with one to three tertiary amino groups, are preferred as bases in this context. Bases of this kind are known *per se* and usually have a molar mass less than 500 g/mol, in particular less than 300 g/mol. These are in particular aliphatic or cycloaliphatic compounds and, as examples thereof might be mentioned: TMTACN (N,N',N"-trimethyl-1,4,7-triazacyclononane); PMDETA (pentamethyldiethylenetriamine); TMEDA (tetramethylethylenediamine); DBU (1,8-diazabicyclo[5.4.0]undec-7-ene); and, DBN (1,5-diazabicyclo[4.3.0]non-5-ene).

The aforementioned metal salt of the catalyst system is preferably a salt with monovalent to trivalent cations, in particular cations of Cu, Ag, or Au. The anion of the metal salts is preferably a carboxylate, in particular a C1 to C6 carboxylate. Silver acetate or copper acetate are mentioned as preferred metal salts.

In an alternative catalyst system for said second step, phosphanes - in particular trialkyl- or triarylphosphanes - may be used either alone or in combination with a metal salt.

The step ii) reaction is preferably carried out at a pressure of from 1 to 100 bar, in particular 5 to 70 bar. The temperature of the reaction mixture is typically from 10°C to 100°C and preferably from 10°C to 80°C. As is known in the art, the progress of the reaction can be monitored by an appropriate method, such as by gas chromatography.

The obtained product of step ii) can be worked up after cooling and pressure release. An organic solvent - preferably an inert, hydrophobic organic solvent, such as dichloromethane or toluene - and an aqueous acid, such as aqueous HCl, can be added to the product so that two phases form. The desired product partitions into the organic phase from which water can be removed by drying. The product can be purified and solvents removed by distillation, preferably in a thin-film evaporator equipped with a wiper system. Alternatively, a workup and purification by crystallization or extraction may be used if the product from step ii) has a high boiling point.

### Transacetalization:

The transacetalization, e.g., of the reaction products from step ii) can be carried out with alcohols under catalysis using Lewis acids or protonic acids, the latter affording better yields. The acid catalysts may be homogeneous, heterogeneous or supported and may be acid inorganic, organometallic or organic catalysts or mixtures thereof. It is noted that stronger acids tend to discolor the reaction products, and weaker acids require higher reaction temperatures.

As suitable inorganic acid catalysts may be mentioned: sulfuric acid; sulfates and hydrogen sulfates, such as sodium hydrogen sulfate; phosphoric acid; phosphonic acid; hypophosphorous acid; aluminum sulfate hydrate; alum; acidic silica gel (pH ≤ 6, in particular ≤ 5); and, acidic aluminum oxide. Furthermore, aluminum compounds of the general formula Al(OR¹)₃ and titanates of the general formula Ti(OR¹)₄ can be used as acid inorganic catalysts, where the R¹ groups can each be identical or different and be selected independently of one another from C₁-C₂₀ alkyl groups, for example, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, isoheptyl, n-octyl, 2-ethylhexyl, n-nonyl, n-decyl, n-dodecyl, n-hexadecyl, or n-octadecyl; C₃-C₁₂ cycloalkyl groups, for example, cyclopropyl, cyclobutyl, cyclopentyl, cyclohexyl, cycloheptyl, cyclooctyl, cyclononyl, cyclodecyl, cycloundecyl, and cyclododecyl; cyclopentyl, cyclohexane, and cycloheptyl are preferred.

Preferred organometallic acid catalysts are selected from dialkyltin oxides R¹₂SnO or dialkyltin esters R¹₂Sn(OR²)₂ wherein: R¹ is defined as above and can be identical or different; and, R² can have the same meanings as R¹ and can in addition be a C₆-C₁₂ aryl, for example, phenyl, o-, m- or p-tolyl, xylyl, or naphthyl. R² can be identical or different in each case. Specific examples of organotin catalysts are tin(II) n-octanoate, tin(II) 2-ethylhexanoate, tin(II) laurate, dibutyltin oxide, diphenyltin oxide, dibutyltin dichloride, dibutyltin diacetate, dibutyltin dilaurate, dibutyltin dimaleate, or dioctyltin diacetate. Particularly preferred representatives of acid organometallic catalysts are dibutyltin oxide, diphenyltin oxide, and dibutyltin dilaurate.

Preferred organic acid catalysts are organic compounds possessing phosphate groups, sulfonic acid groups, sulfate groups or phosphonic acid groups. Furthermore, acidic ion exchangers can also be used as organic acid catalysts, examples of which are sulfonic acid group-containing polystyrene resins which are crosslinked with about 2 mole % of divinylbenzene. Particularly preferred are sulfonic acids such as, for example, p-toluenesulfonic acid or methanesulfonic acid, as well as trifluoroacetic acid.

The alcohols used in the transacetalization reaction can be primary, secondary or tertiary, with primary alcohols being preferred. Diols are particularly preferred because they lead to linear oligomers and the molecular weight of the most suitable diols is from 62 to 5000 g/mol, preferably from 90 to 2000 g/mol. Where polyols with three or more hydroxy groups are used, monools can be used in combination therewith for regulating the molecular weight and branching of the products. Mixtures of alcohols are likewise possible.

The ratio of OR groups of the acetal groups to the OH groups in the transacetalization reaction is typically from 4:1 to 1:4, preferably from 2:1 to 1:2, and more preferably from 1.5:1 to 1:1.5.

The transacetalization reaction can be carried out in various solvents; polar solvents, such as acetonitrile, are preferred. Reaction temperatures lie between room temperature and 100°C, but are preferably < 80°C and particularly preferably < 60°C. The reaction is carried out especially preferably under vacuum for the effective removal of methanol from the equilibrium. It is moreover particularly preferable to this end, if the reaction is carried out without solvent for long stretches. Therefore, for better homogenization the reaction mixture can first be used in solution and the solvent can then be removed under vacuum and, optionally, recovered and reused.

The workup of the reaction products of the transacetalization reaction invention (oligomeric exo-vinylene cyclic carbonate acetals) can occur by simple washing out of the catalyst. If said catalyst is supported, it only needs to be filtered. Higher purities result from shaking out with water, buffers or very weak bases and subsequently drying with drying agents. Precipitations in water and non-solvents are also possible, care being taken that the acetal groups are not hydrolyzed.

It is envisaged that the exo-vinylene cyclic carbonates useful in the present invention can be chain-extended with isocyanates, acid chlorides and / or acid anhydrides without destruction of the exo-vinylene carbonate ring.

### Latent Hardeners

The one-component (1 K) composition of the present invention comprises at least one latent hardener which is activatable by moisture and which is selected from the group consisting of: oxazolidines, aldimines, ketimines and enamines. For clarity, it is noted that latent hardeners may be used in the present invention either as single compounds or as a combination of two or more compounds. Moreover, it is preferred that said at least one latent hardener is selected from the group consisting of oxazolidines, ketimines and aldimines.

Broadly, aldimines are prepared by a synthesis route which consists of reacting an aldehyde (ALD) with an amine (A), which amine (A) is selected from aliphatic linear, branched and cyclic, and mixed aliphatic-aromatic amines having at least two primary amino groups. Amines (A) bearing no secondary amino groups are preferred reactants. Moreover, it is preferable that said amines (A) are di- or trifunctional and more preferably difunctional.

Exemplary diamines which may be used as the reactant amine (A) include but are not limited to: ethylene diamine; 2,2,4- and 2,4,4-trimethylhexamethylene diamine; neopentane diamine; 2-methyl-1,5-pentane diamine; 1,3-diaminopentane; hexamethylene diamine; cycloaliphatic amines such as 1,2- or 1,3-diaminocyclohexane, 1,4-diamino-3,6-dimethylcyclohexane, 1,2-diamino-4-ethylcyclohexane, 1,4-diamino-3,6-diethyl-cyclohexane, 1-cyclohexyl-3,4-diaminocyclohexane, isophorone diamine (IPDA), bis-(4-aminocyclohexyl)-methane, bis-(4-aminocyclohexyl)-propane, 3,3'-dimethyl-4,4'-diaminodicyclohexylmethane, 1,3- and 1,4-bis-(aminomethyl)-cyclohexane; and, aromatic diamines with aliphatically bound amino groups, such as 1,3- and 1,4-bis(aminomethyl)benzene. Of these listed diamines, ethylene diamine, hexamethylene diamine, 1,2-diaminocyclohexane, isophorone diamine (IPDA), bis-(4-aminocyclohexyl)-methane and 1,2-bis-(aminomethyl)benzene (m-xylylene diamine) are particularly preferred.

Exemplary triamines which may be used as the reactant amine (A) include but are not limited to: diethylenetriamine; triethylene triamine; 1,1,1-tris(2'-aminomethyl)ethane; 1,1,1-tris(2'-aminoethyl)ethane; 1,1,1-tris(2'-aminobutyl)ethane; 1,2,3-tris(aminomethyl)benzene; 1,2,4-tris(aminomethyl)benzene; 1,3,5-tris(aminomethyl)benzene; 1,3,5-triaminocyclohexane; and, bishexamethylene triamine.

The reactant amine (A) may also be constituted by a polyoxyalkyleneamine and, in particular, by a polyoxyalkylenediamine. The polyether backbone of said compounds is normally based on propylene oxide, ethylene oxide or combinations thereof. And exemplary commercial polyoxyalkyleneamines include those available under the trade name Jeffamine®.

For completeness, it is noted that the present invention does not preclude the use - as reactant amine (A) - of aliphatic and aromatic polyamide amines, urethane amines and polyamine compounds having more than three functional groups such as tetrakis(2'-aminomethyl)methane, tetrakis(2'-aminoethyl)methane, tetrakis(2'-aminopropyl)methane, and, tetrakis(2'-aminobutyl)methane.

The reactant aldehyde (ALD) used to derive the aldimines is typically a linear, branched or cyclic aliphatic compound or an araliphatic compound having from 3 to 18 or from 3 to 12 carbons atoms. Suitable examples thereof include: acetaldehyde; propionaldehyde; n-butyraldehyde; isobutyraldehyde; 2-methylpentanal; capronaldehyde; and, cyclohexyl aldehyde.

Ketimines are obtainable, for example, from the reaction of the above-described amines (A) with ketones (KET). Typically said ketones will be linear, branched or cyclic aliphatic compounds or araliphatic compounds having from 3 to 18 or from 3 to 12 carbons atoms. Examples of such suitable ketones include but are not limited to: acetone; butanone; 2-pentanone; 3-pentanone; 4-methyl-2-pentanone; cyclopentanone; cyclohexanone; 2-methylcyclohexanone; methyl isopropyl ketone; ethyl isopropyl ketone; 2-hexanone; 3-hexanone; 2-heptanone; 3-heptanone; 4-heptanone; 2-octanone; 3-octanone; 4-octanone; diisopropyl ketone; diisobutyl ketone; 5-ethyl-2-nonanone; methyl isobutyl ketone (MIBK); and, methyl isoamyl ketone. A preference for ketones (KET) having a boiling point greater than 80°C or, more particularly, greater than 110°C may be mentioned.

The reaction between the aldehyde (ALD) or ketone (KET) and the amine (A) - to produce, respectively the aldimine and ketimine - takes place in a condensation reaction with elimination of water. Such condensation reactions are very well known and are described, for example, in Houben-Weyl, "*Methoden der organischen Chemie [Methods* of *Organic Chemistry]*", Volume XI/2, page 73f. Here, the aldehyde (ALD) or ketone (KET) is used stoichiometrically or in stoichiometric excess relative to the primary amino groups of the amine (A).

Usually such condensation reactions are carried out in the presence of a solvent, by means of which the water formed in the reaction can be removed azeotropically. However, preparation processes without the use of solvent can be performed, with the water formed in the condensation being removed directly from the reaction mixture by application of a vacuum. In either case, the reaction mixture (ALD/KET, A) is heated to reflux, with elimination of water, until at least the theoretical amount of water has been removed. Ideally, up to 110% of the theoretical amount of water is distilled off to take into account the aldol condensation which proceeds as a side reaction.

In an interesting embodiment of the present invention, the latent hardener comprises or consists of a ketimine obtained by the reaction of an amine (A) with an acetoacetate-functional compound having at least two acetoacetate groups. The acetoacetate functional compound may be described as the complete acetoacetylation product of a polyol. The production of polyacetoacetates - "acetoacetylation" - may be accomplished by various reaction schemes including: the transesterification of alkyl acetoacetates, such as methyl, ethyl or t-butyl acetoacetate with polyols; the reaction of polyols (or polythiols) with diketene or the diketene-acetone adduct 2,2,6-trimethyl-1,3-dioxin-4H-one. Such compounds and synthesis mechanisms are well known in the art and need not be further detailed here.

In a further interesting embodiment, the latent hardener comprises or consists of a ketimine-terminated urethane oligomer, said ketimine being obtained by reacting an isocyanate-terminated polyurethane prepolymer with a mono- or polyketimine compound containing one other functional group bearing a single active hydrogen atom.

Oxazolidines are derivable by the reaction of 2- or 3-amino-(C2-C6)-alkanols with ketones (KET) and / or aldehydes (ALD) such as those described above. The term 2- or 3-amino-(C2-C6) alkanol is used for aminoalkanols, in which the amino group is present in the second or third position with respect to the hydroxyl group. Exemplary aminoalkanols include: 2-aminoethanol; 1-amino-2-propanol; 1-amino-2-methyl-2-propanol; 2-amino-1-propanol; 2-amino-2-methyl-1-propanol; 3-amino-1-propanol; 1-amino-2-butanol; 2-amino-1-butanol; 3-amino-1-butanol; 3-amino-2-butanol; and, 4-amino-2-butanol. And suitable oxazolidines include 2-[2-(propan-2-yl)-1,3-oxazolidin-3-yl]ethanol (Incozol® 3, available from Incorez Ltd., UK) are furthermore polyoxazolidines, for which the following may be mentioned as commercial examples: Harter OZ, available from Bayer MaterialScience AG, Germany; Zoldine® RD-4 available from Angus Chemical Co, USA; and, also Incozol® LV, Incozol® 4, Incozol® HP, Incozol® NC, Incozol® CF, Incozol® EH, and Incozol® K available from Incorez Ltd, UK.

Enamines may be obtained from the reaction of an acetoacetate-functional compound with a primary amine. Enamines are also obtainable from the condensation reaction of secondary amines with ketones (KET) and / or aldehydes (ALD) which have at least one hydrogen atom on the carbon atom in the alpha position to the carbonyl group. Illustrative secondary amines useable in the latter reaction include: dimethylamine; ethylmethylamine; diethylamine; ethylpropylamine; di-n-propylamine, di-iso-butylamine; di-octylamine; methyl-cyclohexylamine; stearylcyclohexylamine; N,N,N"-methylguanidine; N,N',N"-phenylguanidine; N,N',N"-methylmelamine; N,N',N"-phenylmelamine; pyrrolidine; piperidine; piperazine; indole; and secondary amino-terminated polymers, such as secondary amino-terminated polyethers. And general techniques for the synthesis of enamines using said reactants have been described in, for example: Org. Coatings and Plastics Chem., 44, 151 and 157, (1981); US Patent No. 4,342,841; and, US Patent No. 4,552,945.

Useful references describing latent hardeners of the aforementioned types, which hydrolyze in the presence of moisture, and which may find utility in the present invention, include *inter alia:* US Patent No. 4,391,958; US Patent No. 3,743,626; US Patent No. 4,002,601; US Patent No. 4,118,376; US Patent No. 4,059,549; US Patent No. 3,715,338; US Patent No. 3,865,791; UK Patent No. GB 1,064,841; US Patent No. 3,941,753; and, Yang et al. Journal of Polymer Science, Part A, Vol. 28, Page 1861.

### Additives and Adjunct Ingredients

As is standard in the art, the one component composition may comprise additives and adjunct ingredients. Suitable additives and adjunct ingredients include: catalysts; antioxidants; UV absorbers/light stabilizers; metal deactivators; antistatic agents; reinforcers; fillers; antifogging agents; propellants; biocides; plasticizers; lubricants; emulsifiers; dyes; pigments; rheological agents; impact modifiers; adhesion regulators; optical brighteners; flame retardants; anti-drip agents; nucleating agents; wetting agents; thickeners; protective colloids; defoamers; tackifiers; solvents; reactive diluents; and, mixtures thereof. The selection of suitable conventional additives for the composition of the invention depends on the specific intended use of the 1-component composition and can be determined in the individual case by the skilled artisan.

In certain embodiments of the invention, no catalysts will be required to catalyze the reaction of the exo-vinylene cyclic carbonate groups with the functional groups of the activated hardener: primary and secondary amines released upon activation of the latent hardener by moisture will be highly reactive. However, the use of a catalyst is not precluded and suitable catalysts for the hardening will then be determined in a known manner dependent upon the desired rate of reaction. Catalyst, when desired, is used in an amount of from 0.01 to 10 wt.%, preferably from 0.01 to 5 wt.%, based on the total weight of the one component composition.

Exemplary metal catalysts which can accelerate the hydrolysis of the latent amine include but are not limited to: dialkyltin dicarboxylates, such as dibutyltin diacetate, dibutyltin bis(2-ethylhexanoate), dibutyltin dilaurate, dibutyltin dipalmitate, dibutyltin distearate, dibutyltin dioleate, dibutyltin dilinoleate, dibutyltin dilinolenate, dibutyltin diacetylacetonate, dibutyltin maleate, dibutyltin bis(octyl maleate), dibutyltin phthalate, dimethyltin dilaurate, dioctyltin diacetate and dioctyltin dilaurate; dialkyltin mercaptides, such as dibutyltin bis(2-ethylhexyl mercaptoacetate) and dioctyltin bis(2-ethylhexyl mercaptoacetate); dibutyltin dichloride; monobutyltin trichloride; alkyltin thioesters; dibutyltin oxide; dioctyltin oxide; tin(II) carboxylates, such as tin(II) octoate, tin(II) 2-ethylhexanoate, tin(II) laurate, tin(II) oleate and tin(II) naphthenate; stannoxanes, such as laurylstannoxane; and, bismuth compounds, such as bismuth(III) octoate, bismuth(III) neodecanoate or bismuth(III) oxinates.

Basic catalysts represent an important class of catalysts in the present invention. Preferred among said catalysts are cyclic and bicyclic amidine or guanidine catalysts, including the salts thereof. Mention may be made, in particular of: 1,8-diazabicyclo[5.4.0]undec-7-ene (DBU); 1,5-diazabicyclo[4.3.0]non-5-ene (DBN); 1,5,7-triazabicyclo[4.4.0]dec-5-ene (TBD); and, 1,4,6-triazabicyclo[3.3.0]oct-4-ene (TBO). Further suitable bicyclic guanidine (BCG) catalysts are described *inter alia* in US 2012/02772770 A1. Of course, such basic catalysts can also be used as mixtures, optionally in combination with tri-C₁-C₆-alkylammonium halides and copper salts; as the copper salt mention may be made of copper(I) chloride, copper(I) bromide, copper(II) chloride and copper(II) sulfate.

The above aside, acid catalysts may equally be employed in the composition of the present invention. Broadly any substance meeting the definition of a Lewis or Bronsted acid and which does not interfere with the curing reaction may be used. Among suitable acid catalysts might be mentioned: aromatic sulphonic acid compounds, such as those disclosed in US Patent No. 3,960,688; alkyl esters of phosphoric or alkyl phosphonic acids; dinonyl naphthalene sulfonic acid, paratoluene sulfonic acid, n-dodecylbenzenesulfonic acid and the like; aliphatic carboxylic acids such as fumaric acid, acetic acid, mono-, di- and trichloroacetic acid, oxalic acid, malonic acid, maleic acid and fumaric acid; aromatic carboxylic acids such as benzoic acid, mono-, di- and trichlorobenzoic acid, salicylic acid and alkylmonophthalate; and, inorganic acids such as nitric, sulfuric, phosphoric and hydrohalic acids.

Fillers included in the one component composition can be organic or inorganic in nature. Inorganic fillers, such as carbon black, calcium carbonate, titanium dioxide and may find utility where the one component composition is used as a sealant. Further, highly dispersed silicas, especially pyrogenic silicas or precipitated silicas, may find particular utility as inorganic fillers due to their thixotropic effect. These examples aside, it is preferred that inorganic fillers are present in the form of platelets, which can be aligned to form layers with an intensified barrier effect in regard to fluids and gases. Phyllosilicates such as montmorillonite and hectorite, provide examples thereof and are described *inter alia* in WO 2011/089089 (Bayer Material Science AG), WO 2012/175427 (Bayer IP GMBH) and WO 2012/175431 (Bayer IP GMBH). Most preferred are phyllosilicates that have a layer thickness of from 0.5 to 5 nm, for example from 0.5 to 1.5 nm and an aspect ratio of at least 50, at least 400, at least 1000 or even at least 10,000.

The phyllosilicates can be of natural or synthetic origin. Suitable phyllosilicates include but are not limited to montmorillonite, bentonite, kaolinite, mica, hectorite, fluorohectorite, saponite, beidellite, nontronite, stevensite, vermiculite, fluorovermiculite, halloysite, volkonskoite, suconite, magadiite, sauconite, stibensite, stipulgite, attapulgite, illite, kenyaite, smectite, allevardite, muscovite, palygorskite, sepiolite, silinaite, grumantite, revdite, zeolite, Fuller's earth, natural or synthetic talk or mica, or permutite. Particularly preferred are montmorillonite (aluminum magnesium silicate), hectorite (magnesium lithium silicate), synthetic fluorohectorite and exfoliated, organically modified smectites. The phyllosilicates can be modified or unmodified, in the latter case cationically modified phyllosilicates being preferred. Cationically modified means that inorganic cations of the phyllosilicate are exchanged at least in part by organic cations, said organic cations being organic compounds that possess at least one cationic group, such as a quaternary ammonium group, phosphonium group, pyridinium group or the like.

Where employed, light stabilizers / UV absorbers, antioxidants and metal deactivators should preferably have a high migration stability and temperature resistance. They may suitable be selected, for example, from the groups a) to t) listed herein below, of which the compounds of groups a) to g) and i) represent light stabilizers/UV absorbers and compounds j) to t) act as stabilizers: a) 4,4-diarylbutadienes; b) cinnamic acid esters; c) benzotriazoles; d) hydroxybenzophenones; e) diphenyl cyanoacrylates; f) oxamides; g) 2-phenyl-1,3,5-triazines; h) antioxidants; i) nickel compounds; j) sterically hindered amines; k) metal deactivators; I) phosphites and phosphonites; m) hydroxylamines; n) nitrones; o) amine oxides; p) benzofuranones and indolinones; q) thiosynergists; r) peroxide-destroying compounds; s) polyamide stabilizers; and t) basic co-stabilizers.

The one-component composition should comprise less than 1 wt.% of water, based on the weight of the composition, and is most preferably an anhydrous composition that is essentially free of water. These embodiments do not preclude the composition from either comprising organic solvent or being essentially free of organic solvent. In an interesting embodiment, the one component composition may be characterized by comprising organic solvent in an amount up to 20 wt.%, preferably up to 15 wt.% or up to 10 wt.%, based on the weight of the one component composition.

Broadly, all organic solvents known to the person skilled in the art can be used as a solvent but it is preferred that said organic solvents are selected from the group consisting of: esters; ketones; halogenated hydrocarbons; alkanes; alkenes; and, aromatic hydrocarbons. Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, di-isobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or tetrachloroethylene or mixtures of two or more of the recited solvents.

### Methods and Applications

To form a coating, adhesive or sealant composition, the elements of the composition are brought together and mixed under conditions which inhibit or prevent activation of the latent hardener. As such, it is preferred that the binder and hardener elements are not mixed by hand but are instead mixed by machine in pre-determined amounts under anhydrous conditions. For instance, for small-scale applications in which volumes of less than 1 liter will generally be used, the one component may be formed by co-extrusion of the elements of the composition from a plurality of side-by-side double or coaxial cartridges through a closely mounted static or dynamic mixer. For larger applications, the elements of the composition may be supplied via pipelines to a mixing apparatus which can ensure fine and highly homogeneous mixing of *inter alia* the latent hardener and the binder in the absence of moisture.

In any event, it is important for any package or receptacle into which the duly-mixed one component compositions are disposed to be equipped with an airtight and moisture-tight seal, so that the composition can be stored for a long time, ideally for 12 months or longer. Examples of suitable packages include, but are not limited to: caulking tubes, made of paper, metal or plastic for instance; screw-capped squeezable tubes; cans; and, drums.

The compositions of the present invention may be applied to a given substrate by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

The compositions of the invention are cured by exposure to water, for instance water vapor or moisture. Ordinary, ambient humidity is usually adequate to promote cure. High humidity will accelerate cure and low humidity - such as 15% R.H. or less- will retard cure. Bonds to damp substrates typically cure faster than bonds to dry substrates.

The hardening of the binder compositions of the invention typically occurs at temperatures in the range of from -10°C to 150°C, preferably from 0°C to 100°C, and in particular from 10°C to 70°C. The temperature that is suitable depends on the specific hardeners and the desired hardening rate and can be determined in the individual case by the skilled artisan, using simple preliminary tests if necessary. Of course, hardening at temperatures of from 5°C to 35°C or from 20°C to 30°C is especially advantageous as it obviates the requirement to substantially heat or cool the compositions from the usually prevailing ambient temperature. Where applicable, however, the temperature of one component composition may be raised prior to, during or after application using conventional means, including microwave induction.

The compositions according to the invention may find utility *inter alia* in: varnishes; inks; elastomers; foams; binding agents for particles and / or fibers, such as carbon fibers; the coating of glass; the coating of ceramic; the coating of mineral building materials, such as mortar, brick, tile, natural stone, lime- and / or cement-bonded plasters, gypsum-containing surfaces, fiber cement building materials and concrete; the coating and sealing of wood and wooden materials, such as chipboard, fiber board and paper; the coating of metallic surfaces; the coating of asphalt- and bitumen-containing pavements; the coating and sealing of various plastic surfaces; and, the coating of leather and textiles.

It is also considered that the compositions of the present invention are suitable as pourable sealing compounds for electrical building components such as cables, fiber optics, cover strips or plugs. The sealants may serve to protect those components against the ingress of water and other contaminants, against heat exposure, temperature fluctuation and thermal shock, and against mechanical damage.

By virtue of the fact that the one-component compositions of the present invention, after activation of the hardener, are capable of creating a high binding strength in a short time, often at room temperature, the compositions are optimally used for forming composite structures by surface-to-surface bonding of the same or different materials to one another. The binding together of wood and wooden materials and the binding together of metallic materials may be mentioned as exemplary adhesive applications of the present compositions.

In a particularly preferred embodiment of the invention, the one-component compositions are used as solvent-free or solvent-containing lamination adhesives for gluing plastic and polymeric films, such as polyolefin films, poly(methylmethacrylate) films, polycarbonate (PC) films and Acrylonitrile Butadiene Styrene (ABS) films.

### ILLUSTRATIVE EMBODIMENT OF THE PRESENT INVENTION

In a particularly effective embodiment of the present invention there is provided a moisture curable, one-component composition comprising:
i) at least one compound conforming to Formula (II) 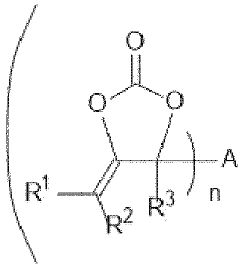 wherein: R¹ to R³ independently of one another stand for a C1 to C6 alkyl group or for an H atom; n is a number from 2 to 10; and,

A is a siloxane-free organic linking group which comprises at least one functional group selected from ether groups and acetal groups; and,
ii) at least one latent hardener which is activatable by moisture, said hardener being selected from the group consisting of oxazolidines, aldimines, and ketimines.
wherein the molar ratio of carbonate groups to the latent amine functional groups (F) in the hardener is in the range of from 1:2 to 4:1, preferably from 1:1 to 2:1. A molar ratio of carbonate groups to the latent amine functional groups of from 1:1 to 1.2: 1 may be particularly effective.

Various features and embodiments of the disclosure are described in the following examples, which are intended to be representative and not limiting.

### EXAMPLES

The following materials are employed in the Examples:

| | |
|---|---|
| Jeffamine D230: | Polyetheramine manufactured by Huntsman Corporation |
| Voranol CP450: | Polyether Polyol manufactured by Dow Chemical Company |
| Vestamin A139: | Aldimine derivative from IPDA and iso-butyraldehyde available from Evonik Industries |

### Example 1: Synthesis of Ketimine A

50.13 g of Jeffamine D230 and 118.83 g of methyl isobutyl ketone (MIBK) - corresponding to 1.5 equivalents of the amine - were added to a three necked round-bottom flask with 73 g of toluene. The reaction was continued for 35 hours - 20 g of MIBK were added after 32 hours to accelerate the reaction - and the evolved water was removed by azeotropic distillation. The crude product was purified by vacuum distillation to obtain Ketimine A: the product was a yellowish transparent liquid and was obtained in an amount of 80.74 g (96% yield).

### Example 2: Synthesis of Ketimine B

50.16 g of Tris-(2-aminoethyl)-amine (manufactured by Sigma Aldrich) and 155.27 g of methyl isobutyl ketone (MIBK) - corresponding to 1.5 equivalents of the amine - were added to a three necked round-bottom flask. The reaction was continued for 12 hours and the water generated was removed by azeotropic distillation. The crude product was purified easily by vacuum distillation to obtain Ketimine B: the product was a yellowish transparent liquid and was obtained in amount of 132.19 g (99% yield).

### Example 3: Synthesis of Ketimine C

33 g of diethylenetriamine (DETA - manufactured by Sigma Aldrich) and 128.16 g of methyl isobutyl ketone (MIBK) were added to a three necked round-bottom flask. The reaction was continued for 7 hours and the water generated was removed by azeotropic distillation. The reaction crude was easily purified by vacuum distillation to obtain Ketimine C: the product was a yellowish transparent liquid and was obtained in amount of 77 g (90% yield).

### Example 4: Synthesis of Ketimine D

37.4 g of polypropylene glycol (OH value 108 mg KOH/g), 37.68 g of Voranol CP450 previously dried under vacuum, and 57.84 g of tert-butyl acetoacetate (TBAA, from Sigma Aldrich) - corresponding to 1.1 equivalent of the OH groups - were added to a three-necked round-bottom flask. The mixture was stirred at 130° to 150° C for 2 hours, and the generated tert-butanol was collected in the Dean-Stark equipment. The IR spectra showed no remaining OH groups after two hours. The excess of TBAA was then distilled under vacuum.

70.45 g of isophorone diamine (IPDA, manufactured by Sigma Aldrich) - corresponding to 2.5 equivalents of the ketone groups - was added and the reaction continued at room temperature for 2 hours. After all the ketone reacted, a Dean-Stark equipment was connected to the flask and 75.80 g of methyl isobutyl ketone (MIBK) - corresponding to 1.5 equivalents of the amine - was added. The reaction was continued for 10 hours and the water generated was removed by azeotropic distillation. The crude reaction product was easily purified by vacuum distillation to obtain Ketimine D: the product was a yellowish transparent liquid and was obtained in amount of 130.94 g (95% yield).

### Example 5: Synthesis of Ketimine E

In a three-necked round-bottom flask equipped with a stirrer, thermometer and a condenser, 696.22 g of PPG 1000 (OH value 108 mg KOH/g) were mixed with 233.5 g of toluene-2,4-diisocyanate (Ongronat 1101, manufactured by BorsodChem) at room temperature. The resulting mixture was heated at 40°-50°C. The temperature rose under the effect of the exothermic reaction, and was then kept at 70°C until an NCO content of 5.5%, as measured by titration, was attained.

60 g of the obtained NCO pre-polymer was transferred into another three-necked round bottom flask - equipped with a stirrer, thermometer and a condenser - and 21 g of Ketimine C was added thereto. The temperature of the batch was carefully controlled so as not to exceed 60°C. The reaction was continued until no further isocyanate groups were present. The resulting final product had a viscosity of 37200 mPa.s at 50°C (Brookfield - RVTDV II, Spindle 27, speed 3 rpm) and 15000 mPa.s at 60°C (Brookfield - RVTDV II, Spindle 27, speed 6 rpm).

### Example 6: Synthesis of OH-free octanediol derived exo-vinylene cyclic carbonate

### (THP protection to yield OD-THP)

Octanediol derived exo-VCC (OD, OH value 124 mg KOH/g, 49.97 g, 110.45 meq OH, 100 eq.%) and 3,4-Dihydro-2H-pyrane (DHP, 15.0 mL, 13.94 g, 165.68 meq, 150 eq.%) were dissolved in CH₂Cl₂ at room temperature under a nitrogen atmosphere. Pyridinium-para-toluenesulfonate (PPTS, 2.78 g, 11.05 meq, 10 eq.%) was added in one portion and the mixture was stirred at room temperature for 16 hours. Diethyl ether (Et₂O, 100 mL) and half-saturated brine solution (100 mL) were added, and the organic layer washed with aqueous NaCl (50 mL, half-saturated).

Drying over MgSO₄, filtering and concentration under reduced pressure yielded the desired product as a yellowish, low viscosity liquid (54.46 g; yield 92%). Conversion was confirmed by ¹H and ¹³C NMR. OH value determination gave a value of 0.5 mg KOH/g.

### Example 7: Synthesis of OH free octanediol derived exo-vinylene cyclic carbonate (Acetyl protection to yield OD-Ac)

Octanediol derived exo-VCC (OD, OH value 124 mg KOH/g, 50 g, 110.5 meq. OH, 100 eq.%) acetic anhydride (13.5 g, 132.6 meq), and 13.4 ml of pyridine were added to a three-necked round bottom flask. The mixture was stirred at room temperature overnight under a nitrogen atmosphere and the day after quenched by adding a solution of 10% NaCl in water (300 ml). The organic phase was extracted with diethyl ether (2x 75ml), washed first with an aqueous solution of NaHSO₄ (1 M, 2x 50ml), then with a saturated solution of NaHCO₃ in water (3x 50 ml), and brine (50 ml). Drying over MgSO₄, filtering and concentrating under reduced pressure yielded the desired product as a yellowish oil (16.7 g; yield 76%). Conversion, as well as the disappearance of the OH groups, were confirmed by ¹H and ¹³C NMR.

### PREPARATION OF ONE COMPONENT COMPOSITIONS.

### Example 8: Composition A

The compound of Example 7 (OD-Ac, 1.5 g, 3.65 meq CC) and Ketimine A (0.74 g, 4 meq NH₂) were mixed homogeneously in a closed vial at room temperature. The obtained mixture was stored in the absence of moisture (molecular sieves; dried N₂ blanket).

### Example 9: Composition B

The compound of Example 6 (OD-THP, 1.5 g, 3.36 meq CC) and Ketimine A (0.676 g, 3.7 meq NH₂) were mixed homogeneously in a closed vial at room temperature, and stored in the absence of moisture (molecular sieves; N₂).

### Example 10: Composition C

The compound from Example 7 (OD-Ac, 1.5 g, 3.65 meq CC) and Vestamin A139 (0.56 g, 4 meq NH₂) were mixed homogeneously in a closed vial at room temperature, and stored in the absence of moisture (molecular sieves; N₂).

### Example 11: Composition D

The compound from Example 6 (OD-THP, 1.5 g, 3.36 meq CC) and Vestamin A139 (0.516 g, 3.7 meq NH₂) were mixed homogeneously in a closed vial at room temperature, and stored in the absence of moisture (molecular sieves; N₂).

### STABILITY AND REACTIVITY TESTS.

### Example 12: Storability in the Absence of Moisture

In the absence of moisture, the storability of the compositions from Examples 8 to 11 was determined by Infrared (IR) analysis by checking the stability of the cyclic carbonate bands (ca 1830 cm⁻¹) and the imine bands (ca. 1671 cm⁻¹ for Vestamin A139 and 1659 cm⁻¹ for Ketimine A) of the compositions over time, for different storage conditions in a closed vial. For this purpose, two vials for each compositions were prepared and stored, one at room temperature, and one at 50°C, respectively.

The values reported in Table 1 herein below indicate the percentage (%) of remaining cyclic carbonates, and are referred to the intensity of the band at 1830 cm⁻¹ that was recorded on day 1.

**Table 1: Storability in the Absence of Moisture**

| **Composition** | **Day 1** | **Day 7** | **Day 14** | **Day 28** |
|---|---|---|---|---|
| A (r.t.) | 100 | 97.3 | 96 | 95 |
| A (50°C) | 100 | 95 | 92 | 87 |
| B (r.t.) | 100 | 96 | 93 | 88 |
| B (50°C) | 100 | 86 | 79 | 70 |
| C (r.t.) | 100 | 98 | 97 | 98 |
| C (50°C) | 100 | 98 | 97 | 98 |
| D (r.t.) | 100 | 97 | 97 | 96 |
| D (50°C) | 100 | 97 | 97 | 95 |

Table 1 shows that compositions A to D can be stored, in closed vials for at least 1 month at room temperature without significant loss of the cyclic carbonate groups. Additionally, at 50°C, the cyclic carbonates do not appear to react significantly with aldimines or ketimines: under this temperature condition, only composition B lost up to 30% of the initial content of cyclic carbonates when stored for 1 month with Ketimine A. It is proposed that the reason for this anomalously lower stability may be due to the presence of trace amounts of OH groups and therefore that not all OH groups had been protected via the reaction of OD with DHP.

### Example 13: Moisture Reactivity Tests

For the reactivity tests, compositions A-D were stored, once prepared according to the reported procedure, in open vials and exposed to atmospheric moisture, at room temperature. Once again, the reactivity was monitored by IR by checking the consumption of the cyclic carbonates and, optionally, the imines.

The values reported in Table 2 herein below indicate the percentage (%) of consumed cyclic carbonates at room temperature, and are referred to the intensity of the band at 1830 cm⁻¹ that was recorded on day 1.

**Table 2: Moisture Reactivity**

| **Composition** | **Day 1** | **Day 7** | **Day 14** | **Day 28** |
|---|---|---|---|---|
| A | 0 | 81* | 90* | Not measured |
| B | 0 | 81* | 93* | Not measured |
| C | 0 | 16 | 34 | 46 |
| D | 0 | 16 | 28 | 68 |

| | | | | |
|---|---|---|---|---|
| * film formation | | | | |

Table 2 shows that ketamine A, once in presence of moisture, quickly releases the corresponding primary amine, even at room temperature: that amine reacts readily with the activated exo-vinylene cyclic carbonate to generate the ketourethane product. Under such conditions, solid films were observed inside vials after 7 days of curing.

On the other hand, Vestamin A139 proved to react much slower in comparison to Ketimine A: under the described conditions, remaining exo-vinylene cyclic carbonates were detected in the reaction mixtures even after one month.

Such experimental results can be only explained by taking into account the different rates of hydrolyses of ketimines and aldimines. Considering that isophorone amine (IPDA), which is generated from the hydrolysis of Vestamine A139, is well known to be highly reactive towards exo-vinylene cyclic carbonates, the observed low reactivity of Vestamin A139 with either OD-Ac and OD-THP is believed to be due to its slower hydrolysis in presence of moisture.

### DETERMINATION OF MECHANICAL PERFORMANCE

### Example 14: Composition A (scale up)

Composition A was scaled up. To the compound from Example 7 (OD-Ac, 10 g, 24.3 meq.) was added Ketimine A from Example 1 (4.95 g, 27 meq.) at room temperature. The mixture was cast into a 2 mm thick sheet with the help of a Teflon mold and allowed to cure at room temperature. After the reaction of more than 90% of the cyclic carbonates - as monitored by IR through measurement of the IR band at ca. 1830 cm⁻¹ - tensile testing specimens S3 ("dog bones" or "paddles") according to DIN 53504 were cut, and tensile testing performed accordingly.

### Example 15: Composition E

To the compound from Example 7 (OD-Ac, 10.11 g, 24.5 meq) was added Ketimine A from Example 1 (4.73 g, 25.8 meq) and Ketimine B from Example 2 (0.19 g, 1.45 meq) at room temperature. The mixture was cast into a 2 mm thick sheet with the help of a Teflon mold and allowed to cure at room temperature. After the reaction of more than 90% of the cyclic carbonates - as monitored by IR through measurement of the IR band at ca. 1830 cm⁻¹ - tensile testing specimens S3 ("dog bones" or "paddles") according to DIN 53504 were cut, and tensile testing performed accordingly.

### Example 16: Composition F

To the compound from Example 7 (OD-Ac, 7.74 g, 19 meq) was added Ketimine D from Example 4 (8.74 g, 21.4 meq) at room temperature. The mixture was cast into a 2 mm thick sheet with the help of a Teflon mold and allowed to cure at room temperature. After the reaction of more than 90% of the cyclic carbonates - as monitored by IR through measurement of the IR band at ca. 1830 cm⁻¹ - tensile testing specimens S3 ("dog bones" or "paddles") according to DIN 53504 were cut, and tensile testing performed accordingly.

### Example 17: Composition G

To compound from example 7 (OD-Ac, 6.98 g, 17 meq) was added Ketimine E from example 5 (9.6 g, 18.6 meq) at room temperature. The mixture was cast into a 2 mm thick sheet with the help of a Teflon mold and allowed to cure at room temperature. After the reaction of more than 90% of the cyclic carbonates - as monitored by IR through measurement of the IR band at ca. 1830 cm⁻¹ - tensile testing specimens S3 ("dog bones" or "paddles") according to DIN 53504 were cut, and tensile testing performed accordingly.

Table 3 herein below shows the averaged elongation at break and tensile strength values obtained, at room temperature, from a minimum of 5 samples for each tested composition.

**Table 3**

| **Composition** | **Max Stress (σ max) [MPa]** | **Max Strain (Elongation at Break) [%]** |
|---|---|---|
| A | 0.5 | 70.9 |
| E | 0.5 | 58.3 |
| F | 0.6 | 140.5 |
| G | 1.2 | 81.5 |

In addition to the above tensile testing, lap shear tests were performed for Composition G (Example 17) after 2 weeks curing at room temperature. Said tests were performed according to DIN EN 1465 and selecting the following substrates: wood-wood; steel-steel; and, ABS-ABS. The results of the tests are shown in Table 4 herein below.

**Table 4: Lap Shear Strengths**

| **Composition** | **Wood-Wood (MPa)** | **Steel - Steel (MPa)** | **ABS - ABS (MPa)** |
|---|---|---|---|
| G | 2.3 | 1.0 | 0.8 |

### ADDITIONAL EXAMPLES AND DETERMINATION OF MECHANICAL PERFORMANCE THEREOF

### Example 18: Synthesis of Trifunctional Aldimine (TriAldi)

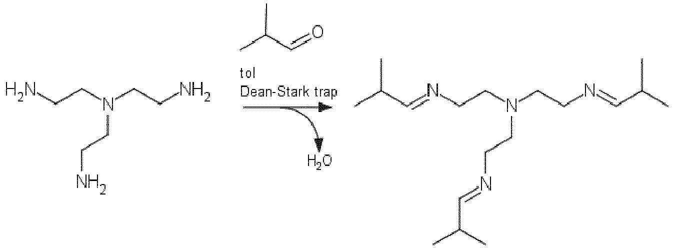

Isobutyraldehyde (73.97 g), tris-(2-aminoethyl)-amine (24.00 g) and toluene (32.66 g) were heated at reflux in a three-neck round bottom flask with an attached Dean-Stark trap until the theoretical amount of generated water (8.9 g) was collected. Residual toluene was distilled off. The crude product was distilled *in vacuo* to obtain the desired product as an orange, clear liquid (50.00 g; yield 99%).

### Example 19: Lap Shears with Trifunctional Aldimine

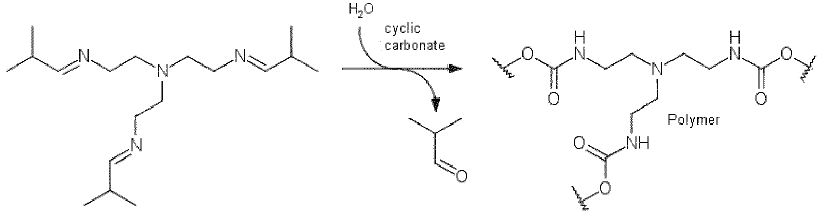

OD-Ac (Example 7; 1.77 g), TriAldi (Example 18; 0.49 g) and water (0.27 g) were mixed together and, after quick homogenization, lap shears prepared according to DIN EN 1465 using the following substrates: wood-wood; steel-steel; ABS-ABS; and PC-PC. The samples were stored at 70 °C in a moist atmosphere (>95 % Relative Humidity) for 8 days. The results of the tests performed at room temperature are shown in Table 5 herein below.

**Table 5: Lap Shear Strengths**

| **Composition** | **Wood-Wood (MPa)** | **Steel - Steel (MPa)** | **ABS - ABS (MPa)** | **PC-PC (MPa)** |
|---|---|---|---|---|
| Example 19 | 2.9 | 1.5 | 1.3 | 1.9 |

### Example 20: Synthesis of Difunctional Oxazolidine (DiOx)

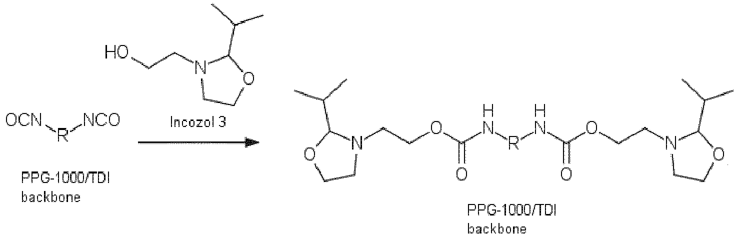

To a round bottom flask charged with PPG-1000 (158.4 g) was added Ongronat TDI-100 (manufactured by BorsodChem; 52.62 g) under a nitrogen atmosphere at 50 °C. The reaction mixture was kept at 70 - 80 °C, until titrimetric determination of NCO groups showed complete conversion. Incozol 3 (available from Incorez Ltd, UK; 39.13 g) was added and the reaction stirred at 80 - 85 °C until fast NCO titration and FTIR indicated full conversion.

The desired product was obtained as a slightly yellow oil with a Brookfield viscosity of 16850 mPas at 50 °C, and 1700 mPas at 80 °C, respectively.

### Example 21: Lap Shears with Difunctional Oxazolidine (DiOx)

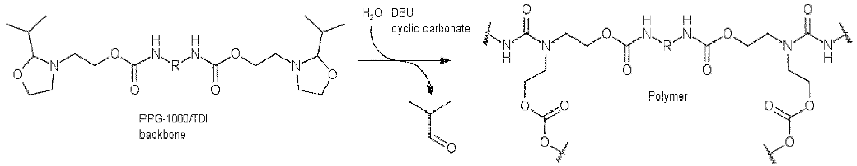

OD-Ac (example 7; 0.80 g), DiOx (Example 20; 1.02 g), water (0.34 g) and Zn based catalyst K-Kat XK-633 (King Industries; 0.040 g) were mixed together and homogenized. Lap shears were prepared according to DIN EN 1465 and using the following substrates: wood-wood; steel-steel; ABS-ABS; and, PC-PC. The samples were stored at 70 °C in a moist atmosphere (>95 % Relative Humidity) for 8 days. The results of the tests performed at room temperature are shown in Table 6 herein below.

**Table 6: Lap Shear Strengths**

| **Composition** | **Wood-Wood (MPa)** | **Steel - Steel (MPa)** | **ABS - ABS (MPa)** | **PC-PC (MPa)** |
|---|---|---|---|---|
| Example 21 | 1.4 | 0.9 | 1.2 | 1.8 |

## Claims

1. A moisture curable, one-component composition comprising:
i) at least one compound (VCC) having two or more exo-vinylene cyclic carbonate units, wherein said exo-vinylene cyclic carbonate units are bonded to one another by means of at least one linking group; and,
ii) at least one latent hardener which is activatable by moisture, said hardener being selected from the group consisting of oxazolidines, aldimines, ketimines and enamines.

2. The composition according to claim 1, wherein said linking group of the compound (VCC) is not directly bonded to the exo-vinylene double bonds.

3. The composition according to claim 1 or claim 2, wherein said compound (VCC) is **characterized in that** it has at least one acetal group in the linking group in the case that the compound has exactly two exo-vinylene cyclic carbonate units.

4. The composition according to any one of claims 1 to 3, wherein in said compound (VCC) the exo-vinylene cyclic carbonate units are 5-alkylidene-1,3-dioxolan-2-one units of general formula (I): 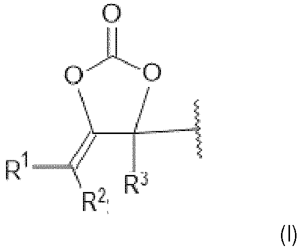 wherein: the linking group is located between the 4 positions of the 5-alkylidene-1,3-dioxolan-2-one units; and, R¹ to R³ are, independently of one another, hydrogen or an organic functional group.

5. The composition according to any one of claims 1 to 4, wherein the compound (VCC) meets either:
i) Formula (II): 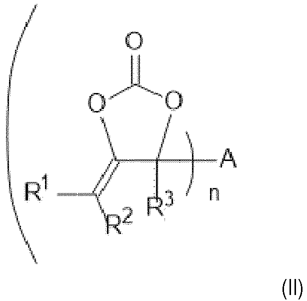
wherein: R¹ to R³ are, independently of one another, hydrogen or an organic functional group;
n is a number that is greater than or equal to 2, preferably from 2 to 10; and,
A is an organic linking group preferably having at least one acetal group;
ii) Formula (IV): 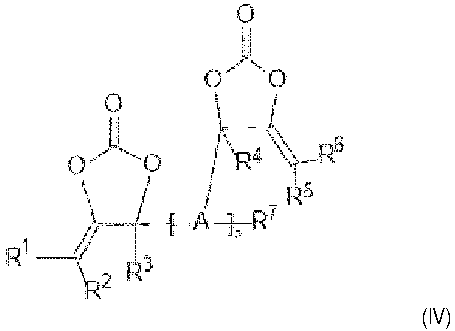
wherein: R¹ to R⁶ are, independently of one another, hydrogen or an organic functional group;
R⁷ is hydrogen, an OH group or an organic functional group;
A is an organic linking group preferably having at least one acetal group; and,
n is a number that is greater than or equal to 1, preferably from 1 to 10;
or,
iii) Formula (V), 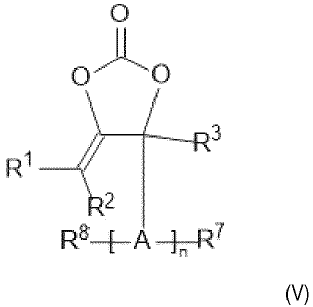
wherein: R¹ to R³ are, independently of one another, hydrogen or an organic functional group;
R⁷ and R⁸ are, independently of one another, hydrogen, an OH group or an organic functional group, and R⁷ and/or R⁸ can contain an exo-vinylene cyclic carbonate group;
A is an organic linking group, preferably having at least one acetal group; and
n is a number that is greater than or equal to 1 if at least one of the functional groups R⁷ and R⁸ contains at least one exo-vinylene cyclic carbonate group, and n is a number that is greater than or equal to 2, preferably from 2 to 10, if neither of the functional groups R⁷ and R⁸ contains an exo-vinylene cyclic carbonate group.

6. The composition according to claim 5, wherein:
R¹, R², R⁵ and R⁶ represent, independently of one another, a C1 to C10 alkyl group or preferably an H atom; and
R³ and R⁴ represent, independently of one another, a C1 to C10 alkyl group or an H atom, preferably a methyl group.

7. The composition according to any one of claims 1 to 6, wherein the total amount of hardener is selected so that the molar ratio of carbonate groups (part i)) to the latent amine functional groups (F) in the hardener is in the range of from 1:10 to 10:1, preferably in the range of from 1:5 to 5:1, more preferably in the range 1:2 to 4:1.

8. The composition according to any one of claims 1 to 7, wherein the total amount of hardener (part ii)) is from 0.1 - 80 wt.%, preferably from 10 to 70 wt.%, based on the combined weight of cyclic carbonate compounds and said hardener.

9. The composition according to any one of claims 1 to 8, wherein said at least one latent hardener which is activatable by moisture is selected from the group consisting of oxazolidines, ketimines and aldimines.

10. The composition according to claim 9, wherein said at least one latent hardener comprises a ketimine obtained by recation of:
an amine (A) selected from aliphatic linear, branched and cyclic, and mixed aliphatic-aromatic amines having at least two primary amino groups; and
a ketone having a boiling point of greater than 80°C, preferably greater than 110°C.

11. The composition according to any one of claims 1 to 10 further comprising a catalyst in an amount of from 0.01 to 10 wt.%, preferably from 0.01 to 5 wt.%, based on the total weight of the composition.

12. The composition according to any one of claims 1 to 11 **characterized by**:
comprising less than 0.1 wt.%, based on the weight of the composition, of water; and / or
comprising less than 0.1 wt.%, based on the weight of the composition, of NCO groups.

13. The use of the composition as defined in any one of claims 1 to 12 in coatings, sealants or adhesives.

14. A method of forming a composite article comprising the steps of:
a) providing first and second substrates;
b) applying the composition as defined in any one of claims 1 to 13 to at least one of said substrates; and,
c) contacting the first and second substrates via the applied composition; and
d) curing the composition by contact with moisture.

15. The method according to claim 14, wherein at least one of the first and second substrates is selected from the group consisting of: glass; ceramic; concrete; mortar; brick; tile; plaster; natural stone; metal; alloy; wood; wooden material; plastic; polymeric film; carbon fiber; leather; and textile.
